# EUROPEAN PATENT SPECIFICATION

(11) **EP 1 687 195 B1**
(45) Date of publication and mention of the grant of the patent: **11.03.2009**
(21) Application number: 04730353.2
(22) Date of filing: 29.04.2004
(51) Int. Cl.: B62J 1/08, B62J 1/04

(54) **SADDLE ASSEMBLY**
SATTELANORDUNG
ENSEMBLE SELLE

(30) Priority: 30.07.2003 SK 9682003
(43) Date of publication of application: 09.08.2006
(73) Proprietor: Meres, Branislav, 935 21 Tlmace (SK)
(72) Inventor: Meres, Branislav, 935 21 Tlmace (SK)
(74) Representative: Porubcan, Robert
(86) International application number: PCT/IB2004/050556
(87) International publication number: WO 2005/009829

(56) References cited:
- DE-U- 20 000 745
- DE-U- 29 810 448
- FR-A- 2 310 913
- FR-A- 2 589 120
- US-A- 3 992 054
- US-A- 4 568 121
- US-A- 4 915 538
- US-A- 5 362 127
- US-A- 5 938 278
- US-A- 5 957 527

## Description

### Technical Field

The invention represents a way of joining the saddle with the seat post, especially for bicycles.

### Background Art

It is mostly the saddle support with various adjustable locks placed on the seat post that is used for joining the saddle with the seat post. Usually this saddle support is formed of two horizontal sticks or tubes of various shapes and at the place for fitting with the lock the sticks or tubes are parallel so that they provide for the saddle shifting within the lock. The lock also usually provides for inclination of the saddle around the back-to-front axis.

The above saddle support became a standard while it uselessly duplicates the bearing function of the saddle. This assembly of the saddle and its support has a big weight and higher number of components. The forces from the saddle are transferred to the seat post through the saddle support and this indirect forces transfer requires the use of several bearing components. Also other known ways of joining the saddle with the seat post, for instance according to the US Pat. 3.992.054, 4.155.590, 5.501.506, 5.466.042, 4.693.627, 5.295.727, 5.383.706 show similar drawbacks. Document FR2310913 discloses a saddle assembly for bicycles according to the preamble of claim 1.

### Disclosure of the Invention

The above drawbacks are to a great extend resolved by the saddle assembly especially for the bicycles comprising a saddle, a seat post, a screw joint and a joining item according to this invention the subject matter of which is represented by the fact that the saddle includes a joining section through which the screw joint is crossing and which is joining the saddle and the seat post and which is crossing the joining item. The joining section as a direct part of the saddle substitutes the function of saddle support. The screw joint then crosses directly the saddle surface. It is therefore advantageous from an ergonomic point of view that the joining section on the saddle surface is formed by embedded cavity in which the screwhead of the screw joint head is positioned. For setting the mutual position of the saddle and the seat post the saddle may be equipped in the joining section at least by one longitudinal opening or several separate openings. The setting of mutual position of the saddle and the seat post is done when the screw joint is released.

It is advantageous if the saddle assembly according to this invention has the joining item consisting minimum of two mutually swinging jointed elements providing for setting the saddle inclination. The saddle inclination setting is done when the screw joint is released. It is advantageous if the touch area ofmutual joint of elements joint with swinging is equipped by grooves, which reduce the requirements on the friction at the elements joint which is achieved by the screw j oint bias.

To exclude unwanted turning of the saddle around the screw joint axis it is advantageous that the joint between the saddle in the joining section and the joining item is formed by groove guiding which prevents the saddle turning also when the screw joint is released.

It is advantageous both from technological and economic point if the joining item forms a single whole with the seat post.

For aesthetic and/or ergonomic reasons, the saddle assembly according to this invention may be equipped by the screw joint cover placed in the saddle joining section.

### Overview of Figures on Drawings

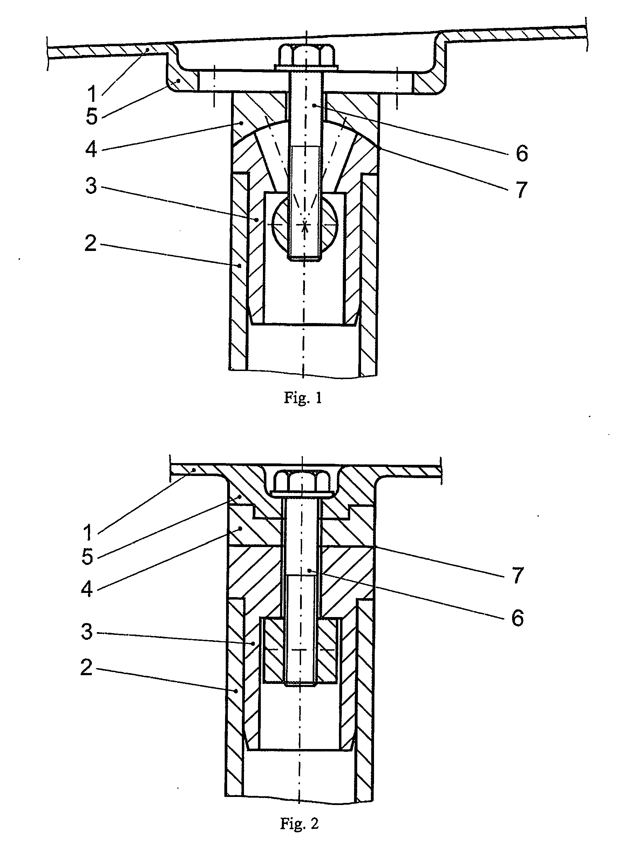

The invention is explained in more detail by drawings. Fig. 1 shows the saddle assembly in longitudinal section and the Fig. 2 shows it in a cross section.

### Example

The saddle assembly according to Fig. 1 and Fig. 2 is formed of a saddle 1 from a composite material where the saddle forms a self-bearing assembly. The saddle 1 has the joining section 5 formed of shaped, embedded longitudinal cavity on the saddle surface. In the joining section cavity 5 there is a longitudinal opening through which the screw joint 6 is crossing. The screw joint 6 is crossing the saddle 1, elements 3, 4 of the joining item 7 and it is anchored in a turning pin positioned into the opening in the element 3 of the joining item 7. Joining of the saddle 1 with the element 4 of the joining item 7 is done by grooves parallel with the longitudinal opening of the joining section 5.

The joining item 7 consists of two interlocking elements 3, 4 with cylinder parts the axis of which is identical with the axis of the turning pin in which there the screw joint 6 is placed. This construction provides for mutually swinging joining of the elements 3, 4 and thus also the change of the saddle inclination setting.

The element 3 of the joining item 7 is fixed into the seat post 2. In the described example, the seat post 2 is manufactured from a composite material and the screw joint 6, joining element 7 are manufactured from light alloys.

### Industrial Use

The industrial use is obvious. According to this invention it is possible to do the industrial manufacture of low-weight saddle assemblies mostly for bicycles.

## Claims

1. Saddle assembly for bicycles consisting of a saddle (1) with a joining section (5), a seat post (2), a screw joint (6), a joining item (7) consisting of at least two joining elements (3, 4), each comprising a cylindrically shaped contact surface, the joining elements (3, 4) being pivotally joined via the cylindrically shaped contact surfaces to set the saddle (1) inclination; a first joining element (3) of the saddle assembly being fixed in the seat post (2) and the saddle (1) being equipped with a guide groove for the longitudinal shifting of the saddle (1) with respect to the second joining element (4), **characterized in that** the saddle (1) surface comprises an embedded cavity in the joining section (5) and **in that** the screw joint (6), in order to join the saddle (1) with the seat post (2), comprises a screw head positioned in the embedded cavity and crosses the embedded cavity and the at least two joining elements (3, 4) and is anchored in a turning pin, the axis of which being identical with the axis of the cylindrically shaped contact surfaces of the joining elements (3, 4).

2. Saddle assembly according to claim 1 **characterized in that** the joining section (5) is equipped with at least one longitudinal opening or at least two separate openings for setting the mutual position of the saddle (1) and the second joining element (4).

3. Saddle assembly according to claims 1 and 2 **characterized in that** the contact surfaces of said first and second joining elements (3, 4) are equipped with grooves

## Patentansprüche

1. Sattel meistens für die Fahrräder, die aus einem Sattel (1) mit einem verbindenden Abschnitt (5), ein Sitz-Pfosten (2), eine Schraube-Verbindung (6), ein verbindender Gegenstand (7) bestehen, besteht aus den minimalen zwei Elementen, die mit dem Schwingen gegenseitig verbunden sind (3.4) mit Zylinder berühren Bereich zum Satz, den, die Neigung des Sattels (1), in der das verbindende Element (3) in den Sitz-Pfosten (2) örtlich festgelegt ist und der Sattel (1) durch eine Rille ausgerüstet wird, die für das longitudinale Verschieben des Sattels (1) gegen das verbindende Element führend ist (4), das vorbei **gekennzeichnet** ist, dem die Oberfläche des Sattels (1) im verbindenden Abschnitt (5) einen eingebetteten Raum hat, durch die die Schraube-Verbindung (6) die überfahrt ist, die den Sattel (1) mit dem Sitz-Pfosten verbindet (2) und überfahrt die Elemente, die mit dem Schwingen gegenseitig verbunden sind (3.4), wo der Schraubenkopf der Schraube-Verbindung (6) im eingebetteten Raum des verbindenden Abschnitts (5) und der Schraube-Verbindung (6) positioniert ist, wird in einem drehenden Stift, der Mittellinie mit der Mittellinie vom zylinderförmigen identisch ist, berühren Bereich der Elemente (3.4) befestigt.

2. Sattel nach Anspruch 1 **gekennzeichnet** vorbei, das der verbindende Abschnitt (5) ist im eingebetteten Raum, der mindestens durch zwei separate Öffnungen oder mindestens durch eine Längsöffnung für Einstellung die gegenseitige Position des Sattels (1) und des verbindenden Elements (4) ausgerüstet wird.

3. Sattel entsprechend Ansprüchen 1 und 2 **gekennzeichnet** vorbei, das berühren Bereich der gesagten gegenseitigen Verbindung der Elemente, die Verbindung mit dem Schwingen (3.4) mit Rillen ausgerüstet wird.

## Revendications

1. La constitution de la selle destinée surtout pour vélos constitués d'une selle (1) avec plan de jonction (5), d'une tige de selle (2), d'un noeud de boulon (6), d'un élément de jonction (7) consistant en au minimum deux éléments communicants liés ( 3,4) avec zone de contact cylindrique pour régler la pente de la selle (1) où l'éléments de jonction(3) est fixé à la tige de selle (2) et la selle (1) est
équipée d'une rainure pour guider le mouvement longitudinal de la
selle (1) contre l'élément de jonction, (4) **est caractérisée par le fait, que** la surface de la
selle (1) comprend dans le plan de jonction(5) une cavité à travers de laquelle passe le noeud de boulon (6) qui lie la selle (1) avec la tige de selle (2) et qui passe par les deux éléments communicants liés (3,4)lorsque la tête du noeud de boulon (6) est positionné dans la cavité intégrée dans le plan de jonction (5) et lorsque le noeud de boulon (6 ) est ancré dans le pivot situé aux axes de surfaces cylindriques des éléments communicants liés (3,4).

2. Conformément à l'exigence 1, la constitution de la selle est **caractérisée par le fait, que** le plan de jonction (5) dans la cavité incorporée est équipé par deux ouvertures individuelles au minumum ou bien au moins par une ouverture longitudinale pour régler la position de la selle (1) vis-à-vis l'élément de jonction(4).

3. Conformément à l'exigence 1 à 2, la constitution de la selle est **caractérisée par le fait, que** la surface de contact de la liaison entre les éléments communicants liés (3,4) est équipée de rainures.
